# DEMANDE DE BREVET EUROPEEN

(11) **EP 1 575 211 A2**
(43) Date de publication de la demande: **14.09.2005**
(21) Numéro de dépôt: 05290490.1
(22) Date de dépôt: 04.03.2005
(51) Int. Cl.: H04L 12/18

(54) **Procédé de transmission de données à multidestination par décrémentation d'un compteur associé**

(30) Priorité: 09.03.2004 FR 0450470
(71) Demandeur: ALCATEL, 75008 Paris (FR)
(72) Inventeur: Dotaro Emmanuel, 91370 Verrieres le buisson (FR); Le Sauze Nicolas, 91440 Bures-sur-yvette (FR)
(74) Mandataire: Fournier, Michel Robert Marie

(57) **Abrégé**

Un procédé est dédié à la transmission de données entre des noeuds (Ni) d'un groupe de noeuds couplés à l'un des bus d'accès (L2-LSP) d'un réseau de communications à accès multiple (R1). Ce procédé consiste i) chaque fois qu'un noeud d'entrée (N2) du groupe reçoit des données destinées à l'un au moins des autres noeuds du groupe, à déterminer le nombre M de noeuds (Ni) de ce groupe par lesquels les données doivent passer pour parvenir à destination, y compris le noeud destinataire (N4), et qui définissent ensemble un chemin de transmission partant dudit noeud d'entrée (N2), puis à assigner à un champ dédié qui est associé aux données une valeur représentative du nombre M, avant de les transmettre, via le bus d'accès, au premier noeud (N3) du chemin, et ii) en chaque noeud (Ni) du chemin, à décrémenter d'une unité le nombre associé aux données reçues afin d'obtenir une nouvelle valeur du champs, et en présence d'une nouvelle valeur égale à une valeur de comparaison choisie, à extraire les données du chemin, ou en présence d'une nouvelle valeur différente de la valeur de comparaison choisie, à remplacer la valeur du champ dédié, qui est associé aux données reçues, par cette nouvelle valeur, puis à transmettre au noeud suivant du chemin les données et la nouvelle valeur du champ dédié associé.

## Description

L'invention concerne le domaine des réseaux de communications dits « à accès multiple », et plus précisément la transmission de données entre noeuds de tels réseaux.

On entend ici par « réseau à accès multiple », un réseau dans lequel se trouve définie au moins une structure ayant une fonction de bus d'accès (en termes de ressources et/ou de connexions) et à laquelle est couplé un groupe choisi de ses noeuds.

Par ailleurs, on entend ici par « transmission de données », tout mode de transmission, qu'il s'agisse d'une transmission en mode dit « point-à-point » (ou « unicast »), ou d'une transmission en mode dit « point-à-multipoints » (de type « multicast » si les données sont destinées uniquement à un sous-groupe d'un groupe de noeuds, ou de type « broadcast » si les données sont destinées à l'ensemble des noeuds d'un groupe), ou encore d'une transmission en mode dit « multipoints-à-multipoints ».

Comme le sait l'homme de l'art, la transmission de données entre un noeud d'entrée, appartenant à un groupe couplé à l'un des bus d'accès d'un réseau de communications à accès multiple, et un ou plusieurs autres noeuds destinataires, appartenant à ce même groupe, nécessite l'association aux données, par empilement, soit d'identifiant de connexions, par exemple sous la forme de labels MPLS (pour « Multi Protocol Label Switching »), permettant de différencier, tout d'abord les différentes ressources à accès multiple (ou bus d'accès) du réseau (par un label « externe » ou primaire), puis une connexion entre noeuds parmi toutes les connexions supportées par le bus d'accès auquel ces noeuds sont couplés (par un label « interne » ou secondaire, ou un champ d'adresse suivant la technologie du réseau client), soit des adresses MAC des noeuds qui définissent le chemin de transmission entre les noeuds concernés.

Dans le premier cas, lorsque l'on souhaite offrir une connectivité entre les N noeuds d'un groupe du réseau, à l'aide des ressources à accès multiple du bus d'accès auquel ils sont couplés, il est nécessaire de définir Nx(N-1)/2 sous-connexions multiplexées ensemble au sein de la connexion à accès multiple. Cela impose donc le traitement dans chaque noeud du label primaire pour router le bus, puis du label secondaire de chaque donnée du bus pour traiter chaque connexion. Ceci limite les applications des modes de transmission point-à-multipoints et multipoints-à-multipoints car même si la structure des noeuds (c'est-à-dire le plan de commutation) est simplifiée par la commutation des bus, le plan de contrôle reste identique à celui utilisé dans un réseau à commutation de paquets.

Dans le second cas, une technique dite « de suppression à destination » (ou « destination stripping ») doit être mise en oeuvre. Cette technique consiste à extraire les données reçues au niveau du noeud destinataire qui est désigné par l'adresse destinataire MAC qui leur est associée, notamment dans les réseaux de type Ethernet et RPR (pour « Resilient Packet Ring »). L'inconvénient principal de cette technique réside dans le fait qu'elle s'effectue dans un espace d'adresses absolues et plat (c'est-à-dire dans lequel les adresses MAC sont codées en dur, de façon universelle et non pas de façon relative, et sans hiérarchie). Avec ce type de technique, une fois que toutes les adresses MAC ont été attribuées à des noeuds d'un réseau, plus aucun nouveau noeud ne peut être ajouté audit réseau. De plus, les paquets multicast ou broadcast doivent porter une adresse spécifique pour les différentier des paquets unicast ce qui limite d'autant plus les possibilités d'adressage.

L'invention a donc pour but d'améliorer la situation.

Elle propose à cet effet un procédé de transmission de données entre des noeuds d'un groupe de noeuds couplés à l'un des bus d'accès d'un réseau de communications à accès multiple.

Ce procédé se caractérise par le fait qu'il consiste :
- chaque fois qu'un noeud d'entrée du groupe reçoit des données destinées à l'un au moins des autres noeuds (destinataires) du groupe, à déterminer le nombre M de noeuds de ce groupe par lesquels les données doivent passer pour parvenir à destination, y compris le (ou les) noeud(s) destinataire(s), et qui définissent ensemble un chemin de transmission partant dudit noeud d'entrée, puis à assigner à un champ dédié, qui est associé aux données, une valeur représentative d'un nombre, ce nombre étant égal à M avant de transmettre lesdites données, via le bus d'accès, au premier noeud du chemin,
- puis en chaque noeud du chemin, à décrémenter d'une unité le nombre qui est associé aux données reçues afin d'obtenir une nouvelle valeur (décrémentée) du champ dédié, et
   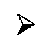 en présence d'une nouvelle valeur (décrémentée) égale à une valeur de comparaison choisie, à extraire les données du chemin, après une éventuelle copie, ou
   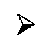 en présence d'une nouvelle valeur (décrémentée) différente de la valeur de comparaison choisie, à remplacer par cette nouvelle valeur la valeur précédente du champ dédié associé aux données reçues, puis à transmettre au noeud suivant du chemin les données et la nouvelle valeur (décrémentée) du champ dédié associé.

Préférentiellement, on procède dans le noeud d'entrée à l'adjonction du champ dédié aux données reçues. Ce champ permet ainsi d'éviter d'avoir deux niveaux d'adressage dans chaque noeud : la valeur du champ est ainsi utilisée pour remplacer le niveau d'adressage secondaire (label secondaire ou adresse client) et seul l'adressage du bus (label primaire) subsiste. Ainsi, on économise du traitement au niveau du plan de contrôle afin de tirer le maximum de bénéfices des modes de transmission point-à-multipoints et multipoints-à-multipoints.

La valeur choisie, à laquelle est comparée la nouvelle valeur issue d'une décrémentation, est par exemple la valeur nulle, par défaut. Mais, cette valeur choisie peut être également différente de zéro.

Par ailleurs, on peut procéder dans le noeud d'entrée à l'adjonction aux données reçues (agencées sous la forme de paquets ou de trames) d'un champ additionnel pouvant prendre une première valeur signalant une transmission en mode point-à-point, une deuxième valeur signalant une transmission en mode point-à-multipoints de type broadcast, et/ou une troisième valeur signalant une transmission en mode point-à-multipoints de type multicast. En variante, on peut réserver des premières valeurs spécifiques pour la transmission des données reçues en mode point-à-point (ou unicast), et des secondes valeurs spécifiques pour la transmission des données reçues en mode broadcast. Dans un cas comme dans l'autre, lorsque les données doivent être transmises en mode broadcast et tant que la valeur du champ dédié est différente de la valeur de comparaison choisie, on peut procéder au niveau de chaque noeud du chemin à la duplication (ou copie) des données et des champs associés en vue de leur extraction et de leur transmission après remplacement de la valeur du champ dédié associé par la nouvelle valeur (résultant de la décrémentation au niveau du noeud).

Lorsque la transmission des données reçues (agencées sous la forme de paquets ou de trames) doit se faire en mode multicast, laquelle correspond à une transmission à des noeuds destinataires appartenant à un sous-groupe (ou domaine) du groupe, on peut procéder en chaque noeud destinataire à une nouvelle détermination du nombre M de noeuds du chemin de transmission suivant que doivent suivre les données pour parvenir au noeud destinataire suivant. Puis, on assigne au champ dédié qui est associé aux données reçues une valeur égale à M, avant de les transmettre au premier noeud du chemin suivant.

Dans une première variante, on peut déterminer pour chaque noeud destinataire Ni du sous-groupe, le nombre Mi de noeuds de ce groupe qui définissent le chemin de transmission que doivent suivre les données pour lui parvenir, puis on associe aux données à transmettre un champ dédié pour chaque noeud destinataire Ni et l'on assigne une valeur représentative du nombre Mi à chacun des champs dédiés, puis on transmet les données et les champs dédiés associés, via le bus d'accès, à un premier noeud du chemin, ensuite en chaque noeud du chemin on décrémente d'une unité la valeur de chaque champ dédié qui est associé aux données reçues afin d'obtenir des nouvelles valeurs, et en présence d'une nouvelle valeur égale à la valeur de comparaison choisie (par exemple nulle), on duplique (ou copie) les données et les champs associés en vue de leur extraction et de leur transmission après remplacement des valeurs des champs dédiés qui leurs sont associés par les nouvelles valeurs.

Une variante de cette première variante peut consister à ce que la valeur (Mi) de chaque champ, associé à un noeud destinataire Ni, représente le nombre de saut après le noeud Ni-1. Dans ce cas, seul le premier champ (Mi) est décrémenté dans un noeud Ni, et lorsque sa valeur devient nulle, on duplique (ou copie) la trame afin de l'extraire et de transmettre sa copie, mais sans ce premier champ (Mi), au noeud suivant Ni+1 du chemin de transmission identifié par le champ suivant (Mi+1) désormais placé en tête de la pile.

Dans une seconde variante, la valeur de comparaison choisie pour extraire un paquet localement dans un noeud de destination Ni peut être configurable. Plus précisément, on peut envisager que cette valeur de comparaison choisie varie d'un noeud destinataire à un autre au sein d'un sous-groupe donné. En effet, par défaut la valeur choisie est de préférence nulle, mais dans le cas multicast, on peut définir une valeur de comparaison particulière par noeud Ni appartenant au sous-groupe, la valeur initiale M demeurant égale au nombre de sauts total jusqu'au dernier noeud du sous-groupe.

Lorsque le réseau est à couche de transport orientée circuit (comme par exemple les circuits de type G.709), les données constituent des paquets qui sont regroupés au sein de trames. Dans ce cas, on associe un champ dédié à chaque paquet d'une trame, la valeur déterminée de chaque champ dédié étant fonction du noeud destinataire au niveau duquel le paquet doit être extrait, et en chaque noeud du chemin de transmission on décrémente d'une unité la valeur de chaque champ dédié contenu dans la trame reçue afin d'obtenir des nouvelles valeurs, et en présence d'un champ dédié comportant une nouvelle valeur nulle, on extrait le paquet qui est associé à ce champ dédié, tandis qu'en présence d'un champ comportant une nouvelle valeur non nulle, on remplace sa valeur par la nouvelle valeur correspondante, puis on transmet au noeud suivant du chemin la trame comprenant les champs dédiés qui sont associés aux paquets restant et qui comportent les nouvelles valeurs.

Dans ce cas, les champs dédiés, qui sont associés aux paquets d'une trame, peuvent être regroupés de façon ordonnée en un paquet de contrôle, conformément à l'ordonnancement des paquets qui leurs sont associés au sein de la trame. Par exemple, on peut placer le paquet de contrôle juste après l'entête de la trame, au début de la partie de trame qui est dédiée aux données utiles (ou « payload ») comprises dans les paquets. En variante, on peut placer le paquet de contrôle à la fin de la partie de trame dédiée aux données utiles comprises dans les paquets. Dans une autre variante, on peut placer les champs dédiés, qui sont associés aux paquets d'une trame, de façon ordonnée dans l'entête de la trame, conformément à l'ordonnancement des paquets qui leurs sont associés au sein de cette trame. Dans toutes ces situations, on peut utiliser des champs dédiés de taille variable ou fixe.

D'autres caractéristiques et avantages de l'invention apparaîtront à l'examen de la description détaillée ci-après, et des dessins annexés, sur lesquels :
- la figure 1 illustre de façon schématique un exemple de réseau de communications permettant de mettre en oeuvre un procédé de transmission de données selon l'invention,
- la figure 2 illustre de façon schématique un premier exemple de trame adapté à la mise en oeuvre de l'invention dans un réseau de type GMPLS à routage de type OSPF,
- la figure 3 illustre de façon schématique un deuxième exemple de trame adapté à la mise en oeuvre de l'invention dans un réseau de type GMPLS à routage de type OSPF,
- la figure 4 illustre de façon schématique un troisième exemple de trame adapté à la mise en oeuvre de l'invention dans un réseau de type GMPLS à routage de type OSPF, et
- la figure 5 illustre de façon schématique un exemple de trame adapté à la mise en oeuvre de l'invention dans un réseau à couche de transport orientée circuit, de type G.709.

Les dessins annexés pourront non seulement servir à compléter l'invention, mais aussi contribuer à sa définition, le cas échéant.

L'invention a pour objet de permettre la transmission de données entre des noeuds d'un réseau de communications à accès multiple.

On entend ici par « réseau à accès multiple », un réseau dans lequel se trouvent définies des structures de bus d'accès auxquelles sont respectivement couplés des groupes choisis de noeuds, éventuellement variables dans le temps.

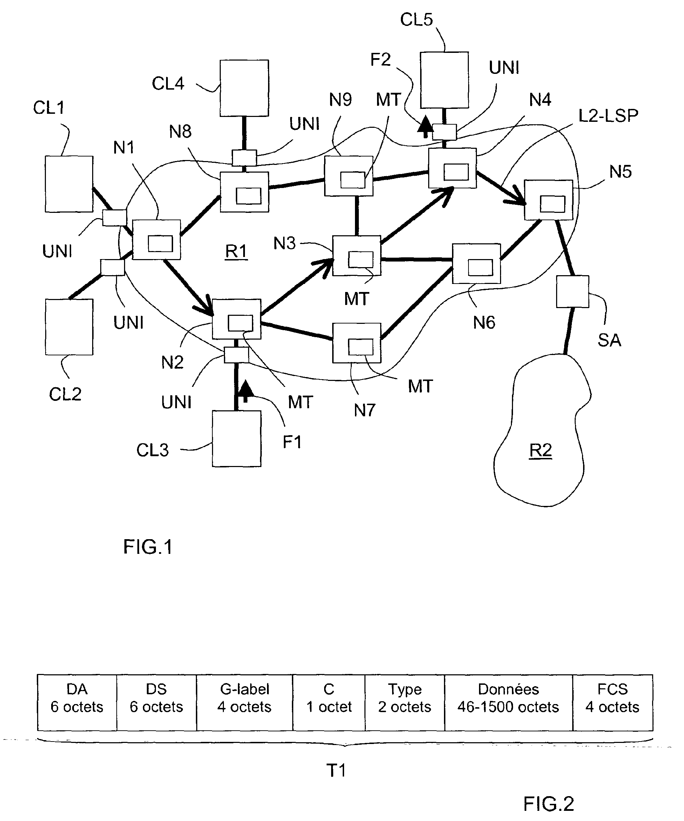

On se réfère tout d'abord à la figure 1 pour décrire un exemple de réalisation d'un réseau de communications R1 permettant de mettre en oeuvre l'invention.

Dans cet exemple de réalisation, on considère que le réseau est de type GMPLS (pour « Generalized Multi Protocol Label Switching ») et qu'il utilise un protocole de routage de type OSPF (pour « Open Shortest Path First »). Il est rappelé que le protocole OSPF est un algorithme de routage de la famille des protocoles de l'Internet (IP pour « Internet Protocol »). Mais, bien entendu, l'invention n'est pas limitée à ce type de réseau. Elle concerne également, comme on le verra plus loin, les réseaux à couche de transport orientée circuit, et notamment les réseaux de type G.709, ainsi que tous les réseaux utilisant une ressource quelconque de type bus par sa couche cliente comme une ressource à accès multiple.

Le réseau R1 illustré sur la figure 1 comporte, classiquement, une multiplicité d'équipements de réseau constituant des noeuds Ni (ici i = 1 à 9, mais il peut prendre n'importe quelle valeur supérieure ou égale à deux). Ces noeuds Ni sont raccordés les uns aux autres et chargés de router entre eux des trames de données, de sorte qu'elles puissent être transmises entre au moins un terminal (ou serveur) de communications source CLj, appartenant, par exemple, à un client j, et au moins un terminal (ou serveur) de communications destinataire CLk, appartenant, par exemple, à un autre client k.

Les noeuds Ni sont par exemple des routeurs périphériques (ou « edge routers), raccordés à un ou plusieurs terminaux de clients CLj et à un ou plusieurs autre routeurs Ni', ou bien des routeurs de coeur (ou « core routers ») raccordés à d'autres routeurs périphériques et/ou de coeur.

Dans l'exemple illustré, le noeud N1 est raccordé à deux terminaux de client CL1 et CL2, le noeud N1 est raccordé à un terminal de client CL3, le noeud N8 est raccordé à un terminal de client CL4, le noeud N4 est raccordé à un terminal de client CL5, et le noeud N5 est raccordé à un autre réseau R2, par exemple de type réseau sans fil (ou WAN pour « Wireless Access Network »), par l'intermédiaire d'un serveur d'accès SA.

Par ailleurs, dans un réseau de type GMPLS, des circuits (ou connexions) virtuel(le)s, appelé(e)s LSPs (pour « Label Switched Paths »), sont établi(e)s entre certains noeuds Ni. Ces LSPs reposent sur un plan de contrôle GMPLS et requièrent une infrastructure de réseau à technologie (quasi) de niveau 1 (dans le cas dit « TDM-LSP »), (quasi) de niveau 2 (dans le cas dit « Layer 2 LSP » (ou L2-LSP)) ou (quasi) de niveau 3 (dans le cas dit « Packet LSP »). Au sein d'un réseau GMPLS (R1), chaque LSP est désigné par un label appelé GMPLS label (ou G-label). Par conséquent, les LSPs sont commutés en fonction des valeurs prises par les labels G-label.

Dans le réseau R1 selon l'invention, on définit au moins un premier niveau de LSP correspondant aux bus qui le couvrent. Chacun de ces LSPs, que l'on peut appeler bus-LSP, est identifié par un label G-label dit primaire qui sert à la commutation du bus dans chaque noeud Ni. Lesdits bus-LSPs sont donc en réalité :
- soit des packet-LSPs, si la granularité de la ressource est de niveau 3 (par exemple paquet IP avec un entête de calage (ou « shim header ») MPLS),
- soit des L2-LSPs, si la granularité de la ressource est de niveau 2 (par exemple une trame Ethernet avec un label G-Label tel que représenté sur la figure 2),
- soit encore des TDM-LSPs, si la granularité de la ressource est de niveau 1 (par exemple une trame de circuit SONET/SDH),
mais avec la particularité d'être vus par une couche cliente comme un bus à accès multiple.

On considère dans ce qui suit que la granularité de la ressource est de niveau 2, de sorte que l'on parlera de circuit L2-LSPs.

Il est ici rappelé qu'un bus peut être de type point-à-multipoints, lorsqu'il n'y a qu'un seul émetteur sur celui-ci, puis avoir des connexions de type broadcast, lorsque tous les noeuds Ni sont des noeuds destinataires devant extraire un paquet, ou de type multicast, lorsque certains noeuds destinataires Ni doivent extraire un paquet, mais pas tous. Un bus peut également être de type multipoints-à-multipoints lorsque plusieurs émetteurs et plusieurs récepteurs (ou destinataires) sont sur celui-ci.

Par ailleurs, une connexion sur un bus peut être de type point-à-multipoints afin de permettre la transmission de paquets vers plusieurs autres noeuds connectés au bus en mode broadcast ou multicast, mais qu'elle ne peut pas être de type multipoints-à-multipoints car il n'y a qu'un seul émetteur concerné.

En d'autres termes, l'aspect multipoints-à-multipoints ou point-à-multipoints n'intervient pas au niveau d'un noeud (ou point) émetteur mais au niveau des bus.

Les trames de données, provenant d'un terminal client source CLj, accèdent au réseau par un noeud périphérique Ni, et sont multiplexées dans l'un des circuits L2-LSPs grâce à des fonctions d'interfonctionnement (ou « Interworking functions ») implantées dans une interface réseau/utilisateur appelée UNI (pour « User Network Interface »). Chaque circuit L2-LSP constitue une structure de bus d'accès au réseau R1. Lorsqu'un circuit L2-LSP (ou bus d'accès) est défini par N noeuds Ni, ou en d'autres termes lorsque N noeuds Ni, constituant un groupe, sont couplés à un même circuit L2-LSP, on définit au sein de ce circuit L2-LSP Nx(N-1)/2 sous connexions afin de procurer la connectivité entre les N noeuds Ni du groupe.

L'invention propose un procédé dédié à la transmission de données entre les noeuds Ni d'un groupe de noeuds, couplés à l'un des bus d'accès (ici de type L2-LSP) d'un réseau de communications à accès multiple (ici le réseau R1 de type GMPLS).

Ce procédé s'applique donc aux situations dans lesquelles un noeud d'entrée (source), par exemple N2, couplé à un circuit L2-LSP défini par les noeuds N1 à N5, a reçu du terminal client CL3 (flèche F1) auquel il est raccordé, via son interface UNI, des données à transmettre à au moins un autre terminal client, par exemple CL5 (flèche F2), qui est raccordé à un noeud destinataire également couplé audit circuit L2-LSP, par exemple N4. Par conséquent, on considère que le réseau R1 est capable de déterminer le chemin (ou (portion de) circuit) de transmission inter-noeuds Ni que doivent emprunter les données pour parvenir au niveau du terminal client destinataire (ici CL5). Ce chemin de transmission est ici constitué d'une portion du circuit L2-LSP (matérialisé par des flèches épaisses), définie par les noeuds N2, N3 et N4.

Le procédé selon l'invention consiste, dans la situation précitée, à déterminer tout d'abord le nombre M de noeuds Ni, couplés au circuit L2-LSP concerné, qui définissent le chemin de transmission que doivent suivre les données, provenant du terminal client CL3 et reçues par le noeud d'entrée N2, afin de parvenir au noeud destinataire N4. Ici, les noeuds définissant le chemin de transmission partant du noeud d'entrée (ou source) N2 sont N3 (noeud intermédiaire) et N4 (noeud destinataire). Par conséquent, dans cet exemple M est égal à deux (2).

Il est important de noter que le chemin de transmission est ici défini entre le premier noeud intermédiaire (ici N3), auquel est raccordé le noeud d'entrée (ici N2), et le noeud destinataire (ici N4). Mais, bien entendu d'autres définitions de chemin de transmission peuvent être envisagées. On peut en effet considérer que le chemin est défini entre le noeud d'entrée et le noeud destinataire. Dans ce cas, le nombre M retenu est égal au nombre total de noeuds définissant le chemin de transmission décrémenté d'une unité.

Une fois le nombre M déterminé, on assigne à un champ dédié C, qui est associé aux données à transmettre, une valeur représentative du nombre M, avant de transmettre ces données et le champ dédié C, via le bus d'accès L2-LSP, au premier noeud (intermédiaire) du chemin de transmission (ici N3). Préférentiellement, dans ce qui suit, et sauf exception signalée, la valeur attribuée au champ dédié C est égale au nombre M.

Cette détermination s'effectue préférentiellement au niveau du noeud d'entrée (ici N2), grâce à une fonction d"'interfonctionnement" (ou IWF) dédiée de l'interface réseau/utilisateur UNI, laquelle est en outre chargée d'associer aux données à transmettre le champ G-label dont la valeur désigne le circuit L2-LSP qu'elles doivent emprunter.

Dans un réseau GMPLS utilisant un format de transport Ethernet, les données à transmettre sont habituellement intégrées dans une trame T comportant un champ DA de six octets (adresse du terminal destinataire), un champ SA de six octets (adresse du terminal source), un champ G-label de quatre octets, un champ type de deux octets, un champ de données comportant entre quarante six et mille cinq cents octets, et un champ FCS de quatre octets (« Check Sum »). Dans un réseau GMPLS (R1) selon l'invention, l'interface UNI est chargée d'adjoindre à la trame le champ dédié C qui comporte initialement la valeur M. Ce dernier occupe par exemple un octet. Une telle trame (T1) est illustrée à titre d'exemple sur la figure 2. L'ordre des différents champs peut varier.

Une fois la trame T1 constituée, elle est insérée sur le circuit L2-LSP concerné qui l'achemine au niveau du premier noeud intermédiaire (ici N3) du chemin de transmission, lequel est raccordé au noeud d'entrée (ici N2). Le noeud N3 lit la valeur M du champ dédié C (ici égale à 2), puis il décrémente d'une unité cette valeur afin d'obtenir une nouvelle valeur M' (ici égale à 1).

Il compare ensuite la nouvelle valeur M' à la valeur nulle (0). Si M' est égale à zéro (0), il extrait la trame T1 du chemin de transmission, et donc du circuit L2-LSP. En revanche, si M' est différente de zéro (0), il remplace la valeur M du champ dédié C par la nouvelle valeur M', puis il transmet au noeud suivant (ici N4) du chemin de transmission, toujours via le circuit L2-LSP, la trame T1 comportant la nouvelle valeur M' du champ dédié C.

Le champ dédié C peut donc être assimilé à un compteur qui, lorsque sa valeur décrémentée M' est égale à zéro désigne le noeud destinataire d'une trame T1. Cela permet d'éviter d'utiliser un champ d'adresse dans chaque trame T1 pour désigner son noeud destinataire. Lorsque plusieurs clients sont connectés à un même noeud du réseau R1 (tel que N1), le ou les interfaces UNI de sortie doivent trier les paquets extraits ayant un compteur M à 0 pour les envoyer vers le bon client CL1 ou CL2. Ceci est fait de façon classique en analysant les adresses clients qui étaient restées « cachées » dans le réseau R1.

Dans l'exemple illustré, M' étant égale à 1, la trame T1 est donc transmise au noeud N4, avec sa nouvelle valeur M'.

Lorsque le noeud suivant (ici N4) reçoit la trame T1, il effectue les mêmes opérations que le noeud précédent N3 (lecture de la valeur M du champ dédié C, puis décrémentation d'une unité pour obtenir M', puis comparaison de M' à la valeur zéro (0), et extraction ou transmission). Tant que la valeur M' du champ dédié C (après décrémentation) n'est pas égale à zéro, le noeud ayant reçu la trame T1 la transmet au noeud suivant du circuit L2-LSP auquel il est couplé. Dans l'exemple illustré, la décrémentation de la valeur M (égale à 1) du champ dédié C, effectuée par le noeud N4, fournit une nouvelle valeur M' égale à zéro. Par conséquent, le noeud N4 extrait la trame T1 du circuit L2-LSP, afin de la transmettre au terminal de client CL3 désigné par le champ d'adresse SA. En d'autres termes, le noeud N4 est ici le noeud destinataire de la trame T1, alors même que ladite trame T1 ne comportait pas d'adresse le désignant comme tel.

Il est important de noter que dans l'exemple précité, la valeur de comparaison choisie, utilisée pour comparer la valeur décrémentée M' au niveau d'un noeud du chemin de transmission, est égale à zéro (0). Mais, on peut envisager que cette valeur de comparaison choisie soit différente de zéro. Dans ce cas, et en présence d'une transmission unicast, la valeur initiale de M doit être égale au nombre de noeuds du chemin de transmission, augmenté d'une valeur choisie, par exemple égale à la valeur de comparaison. C'est dans cette situation que la valeur du champ C est représentative du nombre M et non pas seulement égale à M.

Le traitement des trames T1 (lecture, décrémentation, comparaison et décision), décrit ci-avant, est préférentiellement effectué par un module de traitement MT selon l'invention, implanté dans (ou raccordé à) chaque noeud Ni du réseau R1.

Ce module de traitement MT peut être réalisé sous la forme de circuits électroniques, de modules logiciels (ou informatiques), ou d'une combinaison de circuits et de logiciels. Il pourrait même être implémenté de façon tout-optique, comme décrit dans l'article de J. E. McGeehan et al, « All-optical decrementing of packet's Time-To-Live (TTL) field and subsequent dropping of zero-TTL Packet », Journal of Lightwave technology, vol. 21, n°11, Nov. 2003, mais dans le but non plus d'éviter des boucles infinies dans le réseau (comme tout champ TTL IP), comme indiqué dans cet article, mais de permettre le « routage » d'une trame au sein d'un bus LSP.

Dans ce qui précède, on a décrit une situation dans laquelle la trame T1 était transmise selon un mode point-à-point (ou « unicast »). Mais, l'invention n'est pas limitée à ce seul mode de transmission. Elle peut par exemple s'appliquer conjointement aux modes de transmission point-à-point et point-à-multipoints de type broadcast et/ou de type multicast.

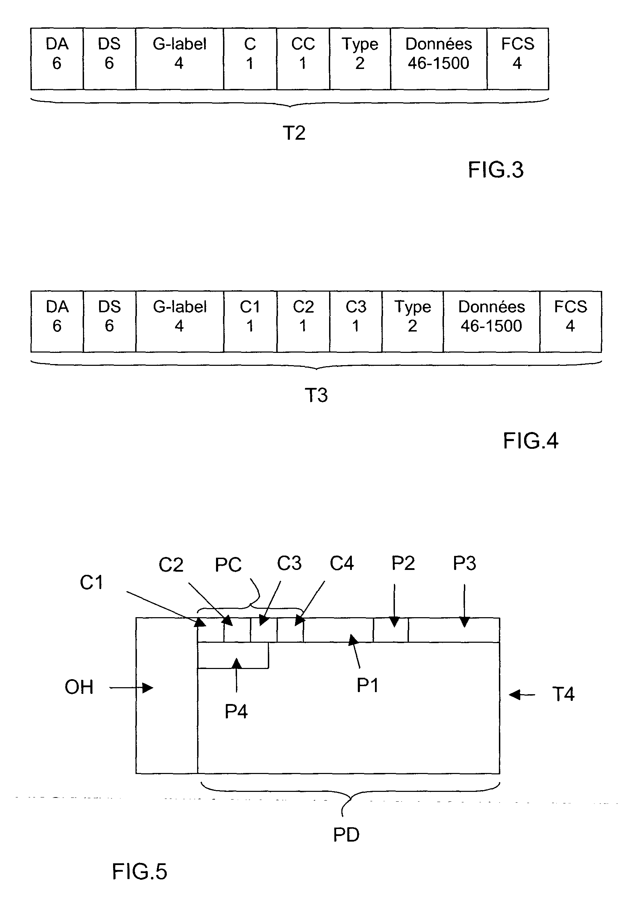

A cet effet, on peut adjoindre à la trame reçue, dans le noeud d'entrée (à l'aide de son interface UNI), un champ additionnel (ou complémentaire) CC pouvant prendre soit une première valeur spécifique signalant une transmission en mode point-à-point, soit une seconde valeur spécifique signalant une transmission en mode broadcast, soit encore une troisième valeur spécifique signalant une transmission en mode multicast. Une trame T2 de ce type est illustrée à titre d'exemple sur la figure 3.

Lorsque le champ additionnel CC sert à signaler un paquet à transmettre en mode unicast ou broadcast, il peut, par exemple, être constitué d'un unique bit prenant les valeurs 0 ou 1. Dans ce cas c'est l'ensemble C + CC qui est constitué d'un octet (C étant alors défini sur sept bits au lieu de huit précédemment). Lorsque le champ additionnel CC sert à signaler un paquet à transmettre en mode unicast, broadcast ou multicast, il peut, par exemple, être constitué de deux bits prenant les valeurs 00, 01 ou 11.

En variante, on peut réserver au sein d'une trame T1 des premières valeurs spécifiques pour la transmission des données reçues en mode point-à-point, et des secondes valeurs spécifiques pour la transmission des données reçues en mode broadcast.

Dans l'un ou l'autre mode de réalisation, lorsqu'une trame T1 ou T2 doit être transmise en mode broadcast, on effectue au niveau de chaque noeud du chemin de transmission la duplication (ou copie) de la trame tant que la valeur M' du champ dédié C est non nulle, afin de l'extraire et de transmettre au noeud suivant sa copie, bien entendu après remplacement de la valeur M du champ dédié C par la nouvelle valeur M'. En d'autres termes, en mode broadcast le module de traitement MT est agencé de manière à forcer l'extraction et la copie de la trame T1 ou T2 alors même que la valeur du champ dédié (ou compteur) C n'est pas égale à zéro.

L'invention peut également s'appliquer au mode de transmission point-à-multipoints de type multicast. Dans ce mode de transmission, la trame doit être transmise à plusieurs noeuds destinataires appartenant à un sous-groupe (ou domaine) du groupe de noeuds définissant un circuit L2-LSP.

Afin de permettre ce type de transmission, au moins trois modes de réalisation peuvent être envisagés.

Un premier mode de réalisation consiste à effectuer en chaque noeud destinataire une nouvelle détermination du nombre M de noeuds du chemin de transmission suivant que doivent suivre les données pour parvenir au noeud destinataire suivant. Cela peut se faire du fait que tous les noeuds qui appartiennent à un même domaine (ou sous-groupe) se connaissent entre eux.

Lorsqu'un noeud ne dispose pas d'interface utilisateur UNI, par exemple du fait qu'il constitue un routeur de coeur, c'est préférentiellement son module de traitement MT qui procède à la détermination du nombre M de noeuds Ni.

Une fois qu'un nouveau chemin de transmission et que la valeur M du champ dédié C associé ont été déterminés, on effectue au niveau du noeud constituant à la fois un noeud d'entrée et un noeud destinataire, la duplication (ou copie) de la trame reçue afin de l'extraire et de transmettre sa copie au premier noeud du chemin suivant, bien entendu après remplacement de la valeur M antérieure du champ dédié C par la nouvelle valeur M.

Il est important de noter que ce premier mode de réalisation correspond plus particulièrement au cas où la valeur choisie de comparaison est la valeur nulle (0).

Un deuxième mode de réalisation consiste tout d'abord à déterminer pour chaque noeud destinataire Ni du sous-groupe (ou domaine) le nombre Mi de noeuds de ce groupe qui définissent le chemin de transmission que doit suivre la trame pour lui parvenir. Puis, on adjoint à la trame reçue, au niveau du noeud d'entrée, un champ dédié Ci pour chaque noeud destinataire Ni et l'on assigne une valeur égale à Mi à chacun des champs dédiés Ci. Une telle trame T3 est illustrée à titre d'exemple sur la figure 4.

On transmet ensuite la trame T3, via le bus d'accès concerné L2-LSP, au premier noeud du chemin de transmission. Puis, en chaque noeud Ni du chemin de transmission, on décrémente d'une unité la valeur Mi de chaque champ dédié Ci afin d'obtenir des nouvelles valeurs M'i, et lorsqu'une nouvelle valeur M'i est nulle, on duplique (ou copie) la trame T3 afin de l'extraire et de transmettre sa copie au noeud suivant du chemin de transmission, bien entendu après remplacement des valeurs Mi des champs dédiés Ci par les nouvelles valeurs M'i. Bien sur, à chaque fois qu'un des champs Mi atteint la valeur nulle (0), on peut optionnellement supprimer ce champ pour « afficher » la valeur Mi suivante non nulle, qui représente le nombre de sauts sur le bus avant la prochaine extraction.

En variante, au moment de la création de la trame T3, chaque champ Mi contient non plus le nombre de sauts entre le noeud source et le noeud destinataire respectif dans le noeud Ni, mais le nombre de saut après le noeud Ni-1. Ainsi, seul le premier compteur Mi est décrémenté dans un noeud, et lorsque le premier compteur Mi arrive à la valeur 0, on duplique (ou copie) la trame T3 afin de l'extraire et de transmettre sa copie, mais sans ce compteur Mi, au noeud suivant du chemin de transmission identifié par le nouveau compteur Mj désormais placé en tête de la pile.

Il est important de noter que ce deuxième mode de réalisation correspond plus particulièrement au cas où la valeur choisie de comparaison est la valeur nulle (0).

On peut envisager un troisième mode de réalisation dans lequel la valeur choisie de comparaison est configurable, et plus précisément qu'elle varie d'un noeud destinataire à un autre au sein d'un sous-groupe donné.

On peut en effet définir une valeur particulière Mi par noeud destinataire Ni appartenant à un sous-groupe donné. Chaque valeur Mi est déterminée en fonction de la position du noeud destinataire Ni dans le chemin de transmission. La valeur initiale M est toujours égale au nombre de sauts total jusqu'au dernier noeud destinataire du sous-groupe. A titre d'exemple illustratif, on considère que M = 10, que le sous-groupe comprend quatre noeuds destinataires N1 à N4, et que les noeuds destinataires N1, N2, N3 et N4 sont respectivement placés en troisième, cinquième, septième et dixième position sur le chemin de transmission. Dans ce cas, le premier noeud N1 extrait les données identifiées comme multicast par le champ additionnel CC et associées à la valeur décrémentée M1 = 7 (la valeur choisie de comparaison au niveau de N1 est alors égale à 7), le deuxième noeud N2 extrait les données identifiées comme multicast par le champ additionnel CC et associées à la valeur décrémentée M2 = 5 (la valeur choisie de comparaison au niveau de N2 est alors égale à 5), le troisième noeud N3 extrait les données identifiées comme multicast par le champ additionnel CC et associées à la valeur décrémentée M3 = 3 (la valeur choisie de comparaison au niveau de N3 est alors égale à 3), et le quatrième et dernier noeud N4 du sous-groupe extrait les données associées à la valeur M4 = 0 (la valeur choisie de comparaison au niveau de N4 est alors égale à 0).

Comme indiqué précédemment, le champ additionnel CC peut désigner un paquet à transmettre dans les modes multicast, broadcast et unicast lorsqu'il est par exemple constitué de deux bits. Mais, lorsqu'il n'est constitué que d'un seul bit il ne peut désigner qu'un paquet à transmettre dans les modes broadcast et unicast. Il faut alors prévoir un autre champ additionnel CC' pour désigner spécifiquement un paquet à transmettre dans le mode multicast.

Cette variante est avantageuse car elle offre un traitement qui ne requiert que la décrémentation d'un seul champ, sans avoir besoin de déterminer en chaque noeud destinataire Ni une nouvelle valeur pour atteindre le noeud destinataire suivant.

On se réfère maintenant à la figure 5 pour décrire une mise en oeuvre du procédé selon l'invention dans un réseau R1 à couche de transport orientée circuit, par exemple de type G.709.

Dans ce cas, les bus d'accès sont des circuits G.709 permettant de transporter au sein de trames T4 (voir figure 5) plusieurs paquets ou portions de paquets, éventuellement encapsulés selon des protocoles choisis, éventuellement différents. Par ailleurs, les noeuds Ni comportent, d'une part, un commutateur de circuit de trame G.709 permettant de « router » les trames G.709 vers les autres noeuds du réseau, et d'autre part, des modules d'insertion et d'extraction des paquets respectivement dans et hors des trames.

Selon l'invention, on associe un champ dédié Ci à chaque paquet Pi devant être transporté par une même trame T4. La valeur initiale Mi de chaque champ dédié Ci d'une trame T4 est déterminée au niveau du noeud d'entrée (ici N2), par la fonction d'interfonctionnement dédiée (IWF) de son interface UNI, en fonction du noeud destinataire Ni au niveau duquel le paquet Pi correspondant doit être extrait.

Il est important de noter que les champs dédiés Ci peuvent présenter des tailles variables ou fixes.

Dans l'exemple illustré sur la figure 5, la trame T4 comprend un entête (ou « overhead ») OH comportant des champs d'information et de contrôle, ainsi qu'une partie PD dédiée aux données utiles (ou « payload ») comportant quatre paquets P1 à P4. Les quatre champs dédiés C1 à C4, associés aux quatre paquets P1 à P4, sont ici placés dans la partie PD. Ils sont plus précisément regroupés ensemble, les uns à la suite des autres dans le même ordre que les paquets P1 à P4, de manière à constituer un paquet de contrôle PC (ou vecteur compteur). Ce paquet de contrôle PC est ici placé en début de la partie PD, juste après l'entête OH et juste avant le premier paquet P1. Mais, le paquet de contrôle PC pourrait être placé à la fin de la partie PD, juste après le dernier paquet P4. Il pourrait être également placé dans l'entête OH.

Le paquet de contrôle PC est préférentiellement substitué aux champs d'entête G.709 qui ne sont plus d'aucune utilité.

Comme dans le mode de réalisation précédent, en chaque noeud Ni du chemin de transmission, on décrémente d'une unité la valeur Mi de chaque champ dédié Ci contenu dans la trame T4 reçue, afin d'obtenir des nouvelles valeurs M'i. Puis on procède à la comparaison de chaque nouvelle valeur M'i à zéro (0). Lorsqu'un champ dédié Ci comporte une nouvelle valeur M'i nulle, on extrait le paquet Pi qui lui est associé. En revanche, lorsqu'un champ Ci comporte une nouvelle valeur M'i non nulle, on remplace sa valeur Mi (reçue) par la nouvelle valeur M'i correspondante. Puis, on transmet au noeud suivant du chemin de transmission la trame T4 comprenant les champs dédiés Ci qui sont associés aux paquets restant Pi et qui comportent les nouvelles valeurs M'i. En d'autres termes, on retire préférentiellement de la trame T4 le champ dédié Ci dont la nouvelle valeur décrémentée M'i est nulle, avant de la transmettre au noeud suivant. Bien entendu, si l'on doit insérer un nouveau paquet, éventuellement encapsulé, dans la trame T4 à transmettre, on peut réutiliser le champ Ci pour ce nouveau paquet, mais avec une nouvelle valeur Mi. Par ailleurs, si plusieurs paquets Pj, éventuellement encapsulés, doivent être insérés dans la trame T4 à transmettre, on leur associe autant de nouveaux champs Cj que nécessaire.

L'invention permet donc ici de s'affranchir non seulement des entêtes G.709, mais également des tables d'adressage nécessaires aux traitements des adresses pour les paquets en transit, dans les réseaux de l'art antérieur, car des tables d'adressage sont toujours nécessaires dans l'interface UNI pour l'insertion et l'extraction de paquets. Le traitement au niveau d'un noeud se résume donc à la lecture de la valeur Mi de chaque champ dédié Ci de la trame reçue, puis la décrémentation d'une unité de chaque valeur Mi afin d'obtenir les nouvelles valeurs M'i, puis la comparaison de chaque M'i à la valeur de comparaison choisie (par exemple zéro (0)), et enfin la décision quant à l'extraction ou la poursuite de la transmission de chaque paquet Pi, compte tenu du résultat de la comparaison de la nouvelle valeur M'i correspondante.

Il est important de noter que l'on peut utiliser le plan de contrôle ou le plan de gestion du réseau pour fournir aux noeuds les désignations des noeuds qui appartiennent au même sous-groupe (ou domaine) que le leur. En d'autres termes, on peut faire varier dynamiquement les définitions des sous-groupes de noeuds. Par ailleurs, on peut également faire varier dynamiquement les définitions des différents bus d'accès d'un réseau, c'est-à-dire les groupes de noeuds qui sont couplés aux différents bus d'accès, toujours au moyen du plan de contrôle ou du plan de gestion du réseau.

L'invention ne se limite pas aux modes de réalisation de module de traitement MT, de noeud de réseau Ni et de procédé de transmission décrits ci-avant, seulement à titre d'exemple, mais elle englobe toutes les variantes que pourra envisager l'homme de l'art dans le cadre des revendications ci-après.

## Revendications

1. Procédé de transmission de données entre des noeuds (Ni) d'un groupe de noeuds couplés à un bus d'accès d'un réseau de communications (R1), **caractérisé en ce qu'**il consiste i) en cas de réception en un noeud d'entrée (N2) dudit groupe de données destinées à au moins un noeud destinataire (N4) dudit groupe, à déterminer le nombre M de noeuds de ce groupe par lesquels les données doivent passer pour parvenir à destination, y compris ledit noeud destinataire (N4), et qui définissent ensemble un chemin de transmission partant dudit noeud d'entrée (N2), puis à assigner à un champ dédié (C) associé auxdites données une valeur représentative d'un nombre, ce nombre étant égal à M avant de transmettre lesdites données, via ledit bus, à un premier noeud (N3) dudit chemin, et ii) en chaque noeud (N3, N4) dudit chemin, à décrémenter d'une unité le nombre associé aux données reçues de manière à obtenir une nouvelle valeur dudit champ dédié (C), et en présence d'une nouvelle valeur égale à une valeur de comparaison choisie, à extraire lesdites données dudit chemin, et en présence d'une nouvelle valeur différente de ladite valeur de comparaison choisie, à remplacer la valeur dudit champ dédié (C), associé aux données reçues, par ladite nouvelle valeur, puis à transmettre au noeud suivant dudit chemin lesdites données et ladite nouvelle valeur du champ dédié (C) associé.

2. Procédé selon la revendication 1, **caractérisé en ce que** l'on procède dans ledit noeud d'entrée (N2) à l'adjonction du champ dédié auxdites données reçues.

3. Procédé selon l'une des revendications 1 et 2, **caractérisé en ce que** l'on procède dans ledit noeud d'entrée (N2) à l'adjonction auxdites données reçues d'un champ additionnel (CC) pouvant prendre une première valeur signalant une transmission en mode point-à-point, une deuxième valeur signalant une transmission en mode point-à-multipoints de type « broadcast », correspondant à une transmission à tous les noeuds destinataires appartenant audit groupe, et/ou une troisième valeur signalant une transmission en mode point-à-multipoints de type « multicast », correspondant à une transmission à des noeuds destinataires appartenant à un sous-groupe dudit groupe.

4. Procédé selon l'une des revendications 1 et 2, **caractérisé en ce que** l'on réserve des premières valeurs spécifiques pour une transmission desdites données reçues en mode point-à-point, et on réserve des secondes valeurs spécifiques pour une transmission desdites données reçues en mode point-à-multipoints de type « broadcast », correspondant à une transmission à tous les noeuds destinataires appartenant audit groupe.

5. Procédé selon l'une des revendications 3 et 4, **caractérisé en ce qu'**en cas de transmission des données en mode point-à-multipoints de type « broadcast » et tant que ladite valeur du champ dédié est différente de ladite valeur de comparaison choisie, on procède en chaque noeud (Ni) dudit chemin à la duplication desdites données et des champs associés en vue de leur extraction et de leur transmission après remplacement de la valeur du champ dédié (C) associé par ladite nouvelle valeur.

6. Procédé selon l'une des revendications 1 à 5, **caractérisé en ce qu'**en cas de transmission des données reçues en mode point-à-multipoints de type « multicast », correspondant à une transmission à des noeuds destinataires appartenant à un sous-groupe dudit groupe, on procède en chaque noeud destinataire à une nouvelle détermination du nombre M de noeuds d'un chemin de transmission suivant que doivent suivre lesdites données pour parvenir audit noeud destinataire suivant, puis on assigne audit champ dédié associé auxdites données reçues une valeur égale à M, avant de les transmettre à un premier noeud dudit chemin suivant.

7. Procédé selon l'une des revendications 1 à 5, **caractérisé en ce qu'**en cas de transmission des données reçues en mode point-à-multipoints de type « multicast », correspondant à une transmission à des noeuds destinataires appartenant à un sous-groupe dudit groupe, i) on détermine pour chaque noeud destinataire (Ni) dudit sous-groupe le nombre Mi de noeuds dudit groupe définissant le chemin de transmission que doivent suivre lesdites données pour lui parvenir, puis on associe auxdites données à transmettre un champ dédié (Ci) pour chaque noeud destinataire (Ni) et l'on assigne une valeur, représentative dudit nombre (Mi), à chacun desdits champs dédiés (Ci), puis on transmet lesdites données et lesdits champs dédiés associés, via ledit bus, à un premier noeud dudit chemin, et ii) en chaque noeud dudit chemin, on décrémente d'une unité la valeur de chaque champ dédié associé aux données reçues de manière à obtenir des nouvelles valeurs, et en présence d'une nouvelle valeur égale à ladite valeur de comparaison choisie, on duplique lesdites données et les champs associés en vue de leur extraction et de leur transmission après remplacement des valeurs des champs dédiés associés par lesdites nouvelles valeurs.

8. Procédé selon l'une des revendications 1 à 5, **caractérisé en ce qu'**en cas de transmission des données reçues en mode point-à-multipoints de « type multicast », correspondant à une transmission à des noeuds destinataires appartenant à un sous-groupe dudit groupe, i) on détermine, de proche en proche et en partant dudit noeud d'entrée (N2), le prochain noeud destinataire (Ni) dudit sous-groupe et le nombre (Mi) de noeuds dudit groupe définissant le chemin de transmission que doivent suivre lesdites données pour lui parvenir, puis on associe auxdites données à transmettre un champ dédié (Ci) pour chaque noeud destinataire (Ni) et l'on assigne une valeur, représentative dudit nombre (Mi), à chacun desdits champs dédiés (Ci), puis on transmet lesdites données et lesdits champs dédiés associés, via ledit bus, à un premier noeud dudit chemin, et ii) en chaque noeud dudit chemin, on décrémente d'une unité la valeur du premier champ dédié associé aux données reçues de manière à obtenir une nouvelle valeur, et en présence d'une nouvelle valeur égale à ladite valeur de comparaison choisie, on duplique lesdites données et les champs associés en vue de leur extraction et de leur transmission après enlèvement du champ dédié associé dont la valeur est égale à ladite valeur de comparaison choisie.

9. Procédé selon l'une des revendications 1 à 8, **caractérisé en ce que** ladite valeur de comparaison choisie est égale à zéro.

10. Procédé selon l'une des revendications 1 à 5, **caractérisé en ce qu'**en cas de transmission des données reçues en mode point-à-multipoints de « type multicast », correspondant à une transmission à des noeuds destinataires appartenant à un sous-groupe dudit groupe, i) on détermine le nombre M de noeuds de ce groupe par lesquels les données doivent passer pour parvenir à chaque noeud destinataire dudit sous-groupe, y compris le dernier (N4), et qui définissent ensemble un chemin de transmission partant dudit noeud d'entrée (N2), ii) puis on détermine une valeur de comparaison pour chacun desdits noeuds destinataires dudit sous-groupe fonction de sa position au sein dudit chemin de transmission, iii) puis on assigne à un champ dédié (C) associé auxdites données une valeur représentative du nombre M, avant de les transmettre, via ledit bus, à un premier noeud (N3) dudit chemin, et iv) en chaque noeud dudit chemin, on décrémente d'une unité la valeur dudit champ dédié (C) associé aux données reçues de manière à obtenir une nouvelle valeur, et en présence d'une nouvelle valeur différente de ladite valeur de comparaison choisie déterminée pour ledit noeud, on remplace la valeur dudit champ dédié (C), associé aux données reçues, par ladite nouvelle valeur, puis on transmet au noeud suivant dudit chemin lesdites données et ladite nouvelle valeur du champ dédié (C) associé, en présence d'une nouvelle valeur égale à la valeur de comparaison déterminée pour ledit noeud et différente de la valeur nulle, on duplique lesdites données et le champ associé en vue de leur extraction et de leur transmission au noeud suivant dudit chemin, après remplacement de la valeur du champ dédié associé par ladite nouvelle valeur, et en présence d'une nouvelle valeur égale à la valeur nulle, on extrait lesdites données dudit chemin.

11. Procédé selon l'une des revendications 6 à 10, **caractérisé en ce que** l'on procède dans ledit noeud d'entrée (N2) à l'adjonction auxdites données reçues d'un autre champ additionnel (CC') pouvant prendre une unique valeur signalant une transmission en mode point-à-multipoints de type multicast.

12. Procédé selon l'une des revendications 1 à 11, **caractérisé en ce que** lesdites données constituent des paquets.

13. Procédé selon l'une des revendications 1 et 2, **caractérisé en ce qu'**en présence d'un réseau (R1) à couche de transport orientée circuit, dans lequel lesdites données constituent des paquets (Pj) regroupés au sein de trames, i) on associe un champ dédié (Cj) à chaque paquet (Pj) d'une trame, la valeur déterminée de chaque champ dédié étant fonction du noeud destinataire au niveau duquel ledit paquet (Pj) doit être extrait, et ii) en chaque noeud (Ni) dudit chemin, on décrémente d'une unité la valeur de chaque champ dédié (Cj) contenu dans la trame reçue de manière à obtenir des nouvelles valeurs, et en présence d'un champ dédié (Cj) comportant une nouvelle valeur égale à la valeur de comparaison choisie, lorsque cette dernière est nulle, on extrait le paquet (Pj) associé audit champ dédié (Cj), et en présence d'un champ dédié (Cj) comportant une nouvelle valeur différente de zéro, on remplace sa valeur par ladite nouvelle valeur correspondante, puis on transmet au noeud suivant dudit chemin ladite trame comprenant les champs dédiés (Cj) associés aux paquets (Pj) restant et comportant les nouvelles valeurs.

14. Procédé selon la revendication 13, **caractérisé en ce que** lesdits champs dédiés (Cj) associés aux paquets (Pj) d'une trame sont regroupés de façon ordonnée en un paquet de contrôle (PC), conformément à l'ordonnancement des paquets (Pj) associés au sein de ladite trame.

15. Procédé selon la revendication 14, **caractérisé en ce que** l'on place ledit paquet de contrôle (PC) juste après l'entête (OH) de la trame, au début de la partie de trame (PD) dédiée aux données utiles comprises dans lesdits paquets (Pj).

16. Procédé selon la revendication 14, **caractérisé en ce que** l'on place ledit paquet de contrôle (PC) à la fin de la partie de trame (PD) dédiée aux données utiles comprises dans lesdits paquets (Pj).

17. Procédé selon la revendication 13, **caractérisé en ce que** lesdits champs dédiés (Cj) associés aux paquets (Pj) d'une trame sont placés de façon ordonnée dans l'entête (OH) de la trame, conformément à l'ordonnancement des paquets (Pj) associés au sein de ladite trame.

18. Procédé selon l'une des revendications 13 à 17, **caractérisé en ce que** lesdits champs dédiés (Pj) sont de taille variable.

19. Procédé selon l'une des revendications 13 à 17, **caractérisé en ce que** lesdits champs dédiés (Pj) sont de taille fixe.
